# EUROPÄISCHE PATENTANMELDUNG

(11) **EP 3 293 495 A1**
(43) Veröffentlichungstag der Anmeldung: **14.03.2018**
(21) Anmeldenummer: 16188571.0
(22) Anmeldetag: 13.09.2016
(51) Int. Cl.: G01D 5/14, G01D 11/24, G01D 11/30, H02K 9/19

(54) **MASCHINE MIT GEKÜHLTER HOHLWELLE UND KONZENTRISCHEM DREHGEBER**

(71) Anmelder: Siemens Aktiengesellschaft, 80333 München (DE)
(72) Erfinder: Büttner, Klaus, 97618 Hollstadt (DE); Warmuth, Matthias, 97618 Windshausen (DE); Werner, Timur, 91058 Erlangen (DE); Zettner, Jürgen, 90587 Veitsbronn (DE)

(57) **Zusammenfassung**

Eine Maschine weist eine Hohlwelle (3) auf, die in Lagern (4) gelagert ist, so dass die Hohlwelle (3) um eine Rotationsachse (5) rotierbar ist. Die Hohlwelle (3) wird im Betrieb der Maschine von einem Kühlmedium (6) durchströmt. Die Hohlwelle (3) grenzt an einem axialen Ende axial und/oder radial außen mediumdicht an ein Kupplungsteil (7, 7') an, über welches das Kühlmedium (6) in die Hohlwelle (3) eingespeist und/oder aus der Hohlwelle (3) ausgespeist wird. Am Kupplungsteil (7, 7') ist drehfest und relativ zur Rotationsachse (5) zentriert ein Tragelement (10, 10') angeordnet, das in die Hohlwelle (3) hineinragt und von dem Kühlmedium (6) umgeben ist. Auf dem Tragelement (10, 10') ist relativ zur Rotationsachse (5) zentriert ein Sensorelement (11) angeordnet. An der Innenseite der Hohlwelle (3) ist eine Maßverkörperung (12) drehfest mit der Hohlwelle (3) verbunden. Die Maßverkörperung (12) und das Sensorelement (11) wirken derart zusammen, dass anhand der von dem Sensorelement (11) ausgegebenen Signale (S) die Drehstellung der Hohlwelle (3) und/oder die Änderung der Drehstellung der Hohlwelle (3) ermittelbar sind.

## Beschreibung

Die vorliegende Erfindung geht aus von einer Maschine,
- wobei die Maschine eine Hohlwelle aufweist, die in Lagern gelagert ist, so dass die Hohlwelle um eine Rotationsachse rotierbar ist,
- wobei die Hohlwelle im Betrieb der Maschine von einem Kühlmedium durchströmt wird,
- wobei die Hohlwelle an einem axialen Ende axial und/oder radial außen mediumdicht an ein Kupplungsteil angrenzt,
- wobei über das Kupplungsteil das Kühlmedium in die Hohlwelle eingespeist und/oder aus der Hohlwelle ausgespeist wird,
- wobei am Kupplungsteil drehfest und relativ zur Rotationsachse zentriert ein Tragelement angeordnet ist, das in die Hohlwelle hineinragt und von dem Kühlmedium umgeben ist.

Eine derartige Maschine ist allgemein bekannt. Es wird auf die EP 0 461 905 A2 oder auf die EP 0 921 623 A2 verwiesen. Auch die WO 2012/084 585 A2, die US 2009/0 121 563 A1 und die US 2012/0 153 718 A1 können in diesem Zusammenhang genannt werden. Das "Tragelement" des Standes der Technik ist hierbei ein Innenrohr, das der Zuführung des Kühlmediums zu dem von dem Kupplungsteil abgewandten Ende der Hohlwelle dient.

Bei Maschinen ist die Drehstellung oder die Drehzahl einer Welle oftmals von Bedeutung. In derartigen Fällen wird die Maschine mit einem Drehgeber versehen. Derartige Drehgeber weisen in der Regel ein Sensorelement und eine Maßverkörperung auf. Die Maßverkörperung ist drehfest mit der Hohlwelle verbunden, das Sensorelement drehfest mit einem nicht rotierenden Element der Maschine, beispielsweise bei einer elektrischen Maschine einem Lagerschild. Das Sensorelement wird, sofern möglich, an dem nicht rotierenden Element der Maschine relativ zur Rotationsachse zentriert angeordnet. Die Maßverkörperung wird - ebenfalls relativ zur Rotationsachse zentriert - auf derjenigen Stirnseite der Rotorwelle angeordnet, die sich in der Nähe des Sensorelements befindet. Die Maßverkörperung und das Sensorelement wirken derart zusammen, dass anhand der von dem Sensorelement ausgegebenen Signale die Drehstellung der Hohlwelle und/oder die Änderung der Drehstellung der Hohlwelle ermittelbar sind.

Bei elektrischen Maschinen ist es in manchen Fällen erforderlich, den Drehgeber auf der Antriebsseite der elektrischen Maschine anzuordnen. In diesem Fall kann die Maßverkörperung nicht auf die dortige Stirnseite der Rotorwelle der elektrischen Maschine aufgesetzt werden, da an dieser Stirnseite im generatorischen Betrieb die Welle der antreibenden Einrichtung und im motorischen Betrieb die Welle der angetriebenen Einrichtung mit der Rotorwelle der elektrischen Maschine verbunden ist. Vielmehr muss die Maßverkörperung in diesem Fall mit der Mantelfläche der Rotorwelle verbunden werden. Das Sensorelement kann in diesem Fall ebenfalls nicht relativ zur Rotationsachse zentriert angeordnet werden. Es wird vielmehr gegenüber der Rotationsachse versetzt angeordnet.

In manchen Fällen ist es weiterhin erforderlich, den Rotor der elektrischen Maschine (oder einer anderen Maschine) über die Rotorwelle zu kühlen. In diesem Fall ist die Rotorwelle - so wie obenstehend beschrieben - als Hohlwelle ausgebildet und wird im Betrieb der Maschine von einem Kühlmedium durchströmt. Das Zuführen und/oder das Abführen des Kühlmediums erfolgen in diesem Fall durch Einspeisung des Kühlmediums an einer Stirnseite der Hohlwelle. Auch in diesem Fall ist daher eine Anordnung der Maßverkörperung an dieser Stirnseite der Hohlwelle nicht möglich. Auch in diesen Fällen wird daher im Stand der Technik die Maßverkörperung mit der Mantelfläche der Hohlwelle verbunden. Das Sensorelement wird in diesem Fall ebenfalls nicht relativ zur Rotationsachse zentriert angeordnet, sondern gegenüber der Rotationsachse versetzt angeordnet.

Derartige Geber, bei denen das Sensorelement nicht relativ zur Rotationsachse zentriert angeordnet ist, sondern gegenüber der Rotationsachse versetzt angeordnet ist, werden im Stand der Technik meist als offaxis-Geber bezeichnet. Diese Geber müssen vom Hersteller des jeweiligen Gebers gut gegen Umwelteinflüsse geschützt werden, d.h. mit gut gekapselten Gehäusen für die Sensoranordnung und einem Schutz der Maßverkörperung versehen werden. Falls die Sensoranordnung und die Maßverkörperung auf magnetischer Basis miteinander zusammenwirken, müssen weiterhin insbesondere bei einem Anbau an eine elektrische Maschine aufwändige Abschirmungsmaßnahmen ergriffen werden, um einen zuverlässigen Betrieb der Geberanordnung gewährleisten zu können.

Derartige Geber müssen weiterhin passend für den jeweiligen Wellendurchmesser der Welle der jeweiligen Maschine ausgelegt sein. Für jeden Wellendurchmesser ist daher ein eigener Geber erforderlich. Bei einem Produktspektrum von Maschinen mit vielen unterschiedlichen Wellendurchmessern ist somit keine Konfiguration des Gebers gegeben, die einheitlich für alle Wellendurchmesser verwendet werden kann.

Für Maschinen, bei denen die Welle im Betrieb der Maschine nicht von einem Kühlmedium durchströmt wird, wurde bereits angedacht, in die Welle von einer Stirnseite aus eine Ausnehmung einzubringen, in der Ausnehmung an der Innenwand der Welle die Maßverkörperung zu befestigen und weiterhin innerhalb der Ausnehmung das Sensorelement anzuordnen. Die Befestigung des Sensorelements erfolgt in diesem Fall über einen Tragarm, der sich - bezogen auf die Rotationsachse - in radialer Richtung über die Welle hinaus erstreckt. Sinn und Zweck dieser Anordnung ist die Abschirmung externer magnetischer Felder von der Geberanordnung durch die aus ferromagnetischem Material bestehende Rotorwelle.

Die Aufgabe der vorliegenden Erfindung besteht darin, eine Maschine, bei der die Welle als Hohlwelle ausgebildet ist und im Betrieb der Maschine von einem Kühlmedium durchströmt wird, derart weiter auszugestalten, dass eine Verwendung eines offaxis-Gebers zur Erfassung von Lage oder Drehzahl nicht erforderlich ist.

Die Aufgabe wird durch eine Maschine mit den Merkmalen des Anspruchs 1 gelöst. Vorteilhafte Ausgestaltungen der Maschine sind Gegenstand der abhängigen Ansprüche 2 bis 14.

Erfindungsgemäß wird eine Maschine der eingangs genannten Art dadurch ausgestaltet,
- dass auf dem Tragelement relativ zur Rotationsachse zentriert ein Sensorelement angeordnet ist,
- dass an der Innenseite der Hohlwelle eine Maßverkörperung drehfest mit der Hohlwelle verbunden ist und
- dass die Maßverkörperung und das Sensorelement derart zusammenwirken, dass anhand der von dem Sensorelement ausgegebenen Signale die Drehstellung der Hohlwelle und/oder die Änderung der Drehstellung der Hohlwelle ermittelbar sind.

Die Maßverkörperung kann insbesondere als Ring oder als Scheibe ausgebildet sein. Eine Ausbildung als Ring ist in der Regel zu bevorzugen.

Es ist möglich, dass die Maßverkörperung direkt und unmittelbar mit der Hohlwelle verbunden ist. Alternativ ist es möglich, dass die Maßverkörperung über eine Tragstruktur mit der Hohlwelle verbunden ist. Durch diese Ausgestaltung ist es insbesondere möglich, ein und dieselbe Maßverkörperung für Hohlwellen mit voneinander verschiedenen Innendurchmessern zu verwenden. Es muss lediglich die Tragstruktur entsprechend angepasst werden.

Es ist möglich, dass die Tragstruktur keine Durchbrechungen für den Durchtritt des Kühlmediums durch die Tragstruktur aufweist. Insbesondere ist diese Ausgestaltung möglich, wenn die Maßverkörperung nahe genug am von dem Kupplungsteil abgewandten Ende der Hohlwelle angeordnet ist, so dass ein Strömen des Kühlmediums über die Maßverkörperung hinaus nicht erforderlich ist. Dies gilt unabhängig von der Ausgestaltung der Maßverkörperung, also nicht nur dann, wenn die Maßverkörperung als Ring ausgebildet ist, sondern auch dann, wenn die Maßverkörperung als Scheibe ausgebildet ist. Weiterhin ist diese Ausgestaltung möglich, wenn die Maßverkörperung als Ring ausgebildet ist. Denn in diesem Fall ist es möglich, dass das Kühlmedium durch die von der als Ring ausgebildeten Maßverkörperung offen gelassene Öffnung hindurchströmt. In diesem Fall kommt es insoweit in Richtung der Rotationsachse gesehen auf die Anordnung der Maßverkörperung innerhalb der Hohlwelle nicht mehr an. In der Regel weist die Tragstruktur jedoch Durchbrechungen für den Durchtritt des Kühlmediums durch die Tragstruktur auf.

Für die Ausgestaltung des Tragelements - also des Elements, welches drehfest und relativ zur Rotationsachse zentriert am Kupplungsteil angeordnet ist, in die Hohlwelle hineinragt und das Sensorelement trägt - sind verschiedene Möglichkeiten gegeben.

Beispielsweise ist es möglich, dass das Tragelement über einen sich von der Innenseite des Kupplungsteils zur Rotationsachse erstreckenden Stab mit der Innenseite des Kupplungsteils verbunden ist.

Alternativ ist es möglich, dass das Tragelement über eine Zwischenscheibe mit der Innenseite des Kupplungsteils verbunden ist. In diesem Fall weist die Zwischenscheibe Durchbrechungen für den Durchtritt des Kühlmediums durch die Zwischenscheibe auf.

Wiederum alternativ ist es möglich, dass das Tragelement als Innenrohr ausgebildet ist, das in seinem innerhalb der Hohlwelle befindlichen Bereich mindestens eine Ausnehmung für den Durchtritt des Kühlmediums aufweist. In diesem Fall ist das Sensorelement an der Stirnseite des Tragelements angeordnet.

Analog zur Befestigung der Maßverkörperung an der Innenseite der Hohlwelle ist es möglich, dass das Sensorelement direkt mit der Innenseite des Innenrohrs verbunden ist. In der Regel ist das Sensorelement jedoch über eine Abschlussscheibe mit der Innenseite des Innenrohrs verbunden. Analog zum Zusammenspiel von Maßverkörperung und Hohlwelle über eine Tragstruktur wird durch diese Ausgestaltung insbesondere ermöglicht, ein und dasselbe Sensorelement bei Innenrohren mit verschiedenen Innendurchmessern einzusetzen. Es muss lediglich die Abschlussscheibe entsprechend angepasst werden.

Wenn das Tragelement über einen Stab oder eine Zwischenscheibe mit der Innenseite des Kupplungsteils verbunden ist, ist in der Regel das Kupplungsteil (zumindest in geringem Umfang) axial beweglich angeordnet. Weiterhin umgibt das Kupplungsteil in diesen Fällen die Hohlwelle in der Regel radial außen. Wenn hingegen das Tragelement als Innenrohr ausgebildet ist, ist das Kupplungsteil oftmals als Lagerschild ausgebildet, der axial an die Hohlwelle angrenzt. Das Innenrohr kann in diesem Fall in den Lagerschild eingelassen sein.

Für die Energieversorgung des Sensorelements und den Datenverkehr zwischen dem Sensorelement und einer Auswertungseinrichtung ist in der Regel eine Verkabelung erforderlich. Vorzugsweise ist die Verkabelung des Sensorelements im Inneren des Tragelements angeordnet, so dass die Verkabelung vor einem unmittelbaren Kontakt mit dem Kühlmedium geschirmt ist. Durch diese Ausgestaltung wird die Betriebssicherheit des Sensorelements erhöht. Alternativ kann die Verkabelung unmittelbar vom Kühlmedium umgeben sein. Diese Ausgestaltung ist fertigungstechnisch einfacher.

Die Maschine kann insbesondere als elektrische Maschine ausgebildet sein. In diesem Fall weist die Maschine einen Stator und einen Rotor auf, wobei der Rotor drehfest auf der Hohlwelle angeordnet ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Schnitt durch eine elektrische Maschine,
- FIG 2 bis 4: mögliche Ausgestaltungen einer Welle der elektrischen Maschine von FIG 1 und
- FIG 5 bis 7: mögliche Ausgestaltungen von Tragstrukturen.

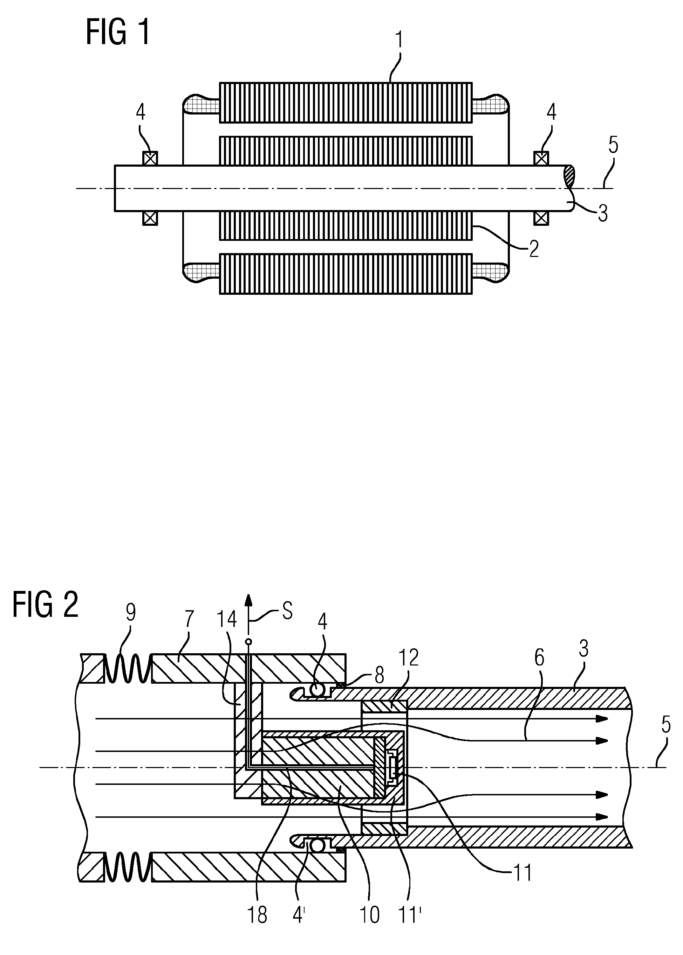

Gemäß FIG 1 ist eine Maschine als elektrische Maschine ausgebildet sein. Die Maschine weist daher einen Stator 1 und einen Rotor 2 auf. Der Rotor 2 ist drehfest auf einer Rotorwelle 3 angeordnet. Die Rotorwelle 3 ist in Lagern 4 gelagert. Die Rotorwelle 3 ist somit um eine Rotationsachse 5 rotierbar.

Soweit nachfolgend die Begriffe "axial", "radial" und "tangential" verwendet werden, sind sie stets auf die Rotationsachse 5 bezogen. "Axial" ist eine Richtung parallel zur Rotationsachse 5. "Radial" ist eine Richtung orthogonal zur Rotationsachse 5 direkt auf die Rotationsachse 5 zu bzw. von ihr weg. "Tangential" ist eine Richtung, die sowohl orthogonal zur Axialrichtung als auch orthogonal zur Radialrichtung verläuft. "Tangential" ist also eine Richtung, die bei konstanter Axialposition und in konstantem radialem Abstand kreisförmig um die Rotationsachse 5 herum gerichtet ist.

Die vorliegende Erfindung wird nachstehend in Verbindung mit der Rotorwelle 3 erläutert, also der Rotorwelle 3 der elektrischen Maschine. Prinzipiell ist die vorliegende Erfindung jedoch bei beliebigen Maschinen anwendbar, also beispielsweise auch bei rein mechanischen Maschinen wie einem Getriebe oder bei einer Verbrennungskraftmaschine.

Die FIG 2 bis 4 zeigen verschiedene mögliche Ausgestaltungen der Rotorwelle 3. Nachfolgend werden zunächst die Gemeinsamkeiten der FIG 2 bis 4 erläutert. Danach wird einzeln auf die konkreten Ausgestaltungen der FIG 2 bis 4 näher eingegangen.

Bei allen Ausgestaltungen ist die Rotorwelle 3 als Hohlwelle ausgebildet. Die Rotorwelle 3 wird daher nachstehend durchgängig als Hohlwelle bezeichnet. Auch wird ihr das Bezugszeichen 3 zugeordnet.

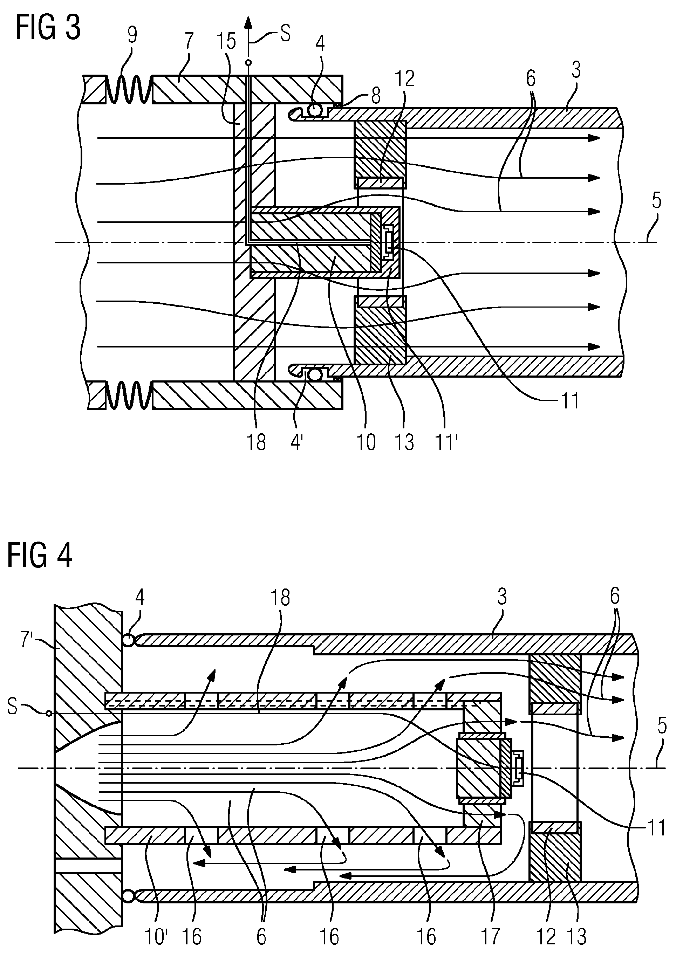

Die Hohlwelle 3 wird im Betrieb von einem Kühlmedium 6 durchströmt. Dargestellt in den FIG 2 bis 4 sind mögliche Strömungswege des Kühlmediums 6. In der Regel handelt es sich bei dem Kühlmedium 6 um Wasser. Alternativ kann es sich um ein anderes flüssiges Kühlmedium handeln, beispielsweise ein Öl. Auch gasförmige Kühlmedien (Luft, Dampf oder ein technisches Gas) kommen in Frage. Zum Einspeisen des Kühlmediums 6 in die Hohlwelle 3 und/oder Ausspeisen des Kühlmediums 6 aus der Hohlwelle 3 ist die Hohlwelle 3 an einem axialen Ende radial außen mediumdicht von einem Kupplungsteil 7, 7' umgeben. Das Kupplungsteil 7, 7' rotiert nicht mit der Hohlwelle 3 mit, sondern ist drehfest angeordnet. Die mediumdichte Abdichtung erfolgt über eine entsprechende Dichtung 8. Das Kupplungsteil 7, 7' kann, wie in den FIG 2 und 3 für das Kupplungsteil 7 durch Federn 9 angedeutet ist, axial beweglich sein. Zwingend ist dies aber nicht erforderlich. Dies ist in FIG 4 für das Kupplungsteil 7' dargestellt. Über das Kupplungsteil 7, 7' wird das Kühlmedium 6 in die Hohlwelle 3 eingespeist und/oder aus der Hohlwelle 3 ausgespeist.

Das Kupplungsteil 7' der Ausgestaltung von FIG 4 ist als Lagerschild ausgebildet. Der Lagerschild 7' grenzt axial an die Hohlwelle 3 an. Dort befindet sich in diesem Fall auch die Dichtung 8.

Am Kupplungsteil 7, 7' ist ein Tragelement 10, 10' angeordnet. Das Tragelement 10, 10' kann beispielsweise aus Kunststoff bestehen. Es ist am Kupplungsteil 7, 7' drehfest und relativ zur Rotationsachse 5 zentriert angeordnet. Das Tragelement 10, 10' ragt in die Hohlwelle 3 hinein. Es ist von dem Kühlmedium 6 umgeben. Auf dem Tragelement 10, 10' ist ein Sensorelement 11 angeordnet. Das Sensorelement 11 ist auf dem Tragelement 10, 10' relativ zur Rotationsachse 3 zentriert angeordnet. In der Regel ist bei den Ausgestaltungen der FIG 2 und 3 zumindest das Sensorelement 11, manchmal auch zusätzlich das Tragelement 10, 10' von einer Vergussmasse 11' umgeben. Dies ist auch bei der Ausgestaltung gemäß FIG 4 möglich.

Weiterhin ist an der Innenseite der Hohlwelle 3 eine Maßverkörperung 12 drehfest mit der Hohlwelle 3 verbunden. Die Maßverkörperung 12 und das Sensorelement 11 wirken derart zusammen, dass anhand der von dem Sensorelement 11 ausgegebenen Signale S die Drehstellung der Hohlwelle 3 und/oder die Änderung der Drehstellung der Hohlwelle 3 ermittelbar sind.

Die Art und Weise, auf welche das Sensorelement 11 und die Maßverkörperung 12 zusammenwirken, kann nach Bedarf bestimmt sein. Beispielsweise können das Sensorelement 11 und die Maßverkörperung 12 magnetisch, optisch, akustisch oder durch elektromagnetische Wellen zusammenwirken.

Gemäß der Darstellung in den FIG 2 und 3 ist die Maßverkörperung 12 als Ring ausgebildet. Gemäß der Darstellung in FIG 4 ist die Maßverkörperung 12 als Scheibe ausgebildet.

Bei der Ausgestaltung gemäß FIG 2 ist die Maßverkörperung 12 direkt mit der Innenseite der Hohlwelle 3 verbunden. Bei der Ausgestaltung der FIG 3 und 4 ist die Maßverkörperung 12 mit der Innenseite der Hohlwelle 3 über eine Tragstruktur 13 verbunden. Die Tragstruktur 13 kann beispielsweise aus Kunststoff bestehen.

Die Tragstruktur 13 kann, wie aus FIG 3 und der oberen Hälfte von FIG 4 ersichtlich ist, Durchbrechungen für den Durchtritt des Kühlmediums 6 durch die Tragstruktur 13 aufweisen. Dies ist jedoch im Regelfall nicht zwingend erforderlich. Alternativ ist es also möglich, wie in der unteren Hälfte von FIG 4 dargestellt, dass die Tragstruktur 13 keine derartigen Durchbrechungen aufweist.

Das Fehlen von Durchbrechungen ist - unabhängig von der axialen Anordnung der Maßverkörperung 12 in der Hohlwelle 3 - stets möglich, wenn die Maßverkörperung 12 als Ring ausgebildet ist. Wenn die Maßverkörperung 12 als Scheibe ausgebildet ist, ist das Fehlen von Durchbrechungen dann möglich, wenn der Bereich der Hohlwelle 3, der sich von der Tragstruktur 13 ausgesehen auf der vom Kupplungsteil 7, 7' abgewandten Seite befindet, nicht mehr von dem Kühlmedium 6 durchströmt werden muss. Dies kann insbesondere dann der Fall sein, wenn die Maßverkörperung 12 sehr nahe an dem vom Kupplungsteil 7, 7' entfernten Ende der Hohlwelle 3 angeordnet ist.

Bei der Ausgestaltung gemäß FIG 2 ist das Tragelement 10 als einfacher, sich in Axialrichtung erstreckender Zylinder ausgebildet. Das Tragelement 10 ist bei der Ausgestaltung gemäß FIG 2 über einen Stab 14 mit der Innenseite des Kupplungsteils 7 verbunden. Der Stab 14 erstreckt sich in diesem Fall von der Innenseite des Kupplungsteils 7 nach radial innen zur Rotationsachse 5. In Tangentialrichtung überdeckt der Stab 14 nur einen kleinen Winkelbereich. Der Stab 14 kann beispielsweise aus Kunststoff bestehen.

Bei der Ausgestaltung gemäß FIG 3 ist das Tragelement 10 ebenfalls als einfacher, sich in Axialrichtung erstreckender Zylinder ausgebildet. Das Tragelement 10 ist jedoch über eine Zwischenscheibe 15 mit der Innenseite des Kupplungsteils 7 verbunden. In diesem Fall weist die Zwischenscheibe 15, wie in FIG 3 durch mögliche Strömungspfade des Kühlmediums 6 angedeutet ist, Durchbrechungen für den Durchtritt des Kühlmediums 6 durch die Zwischenscheibe 15 auf. Die Zwischenscheibe 15 kann beispielsweise aus Kunststoff bestehen.

Bei der Ausgestaltung gemäß FIG 4 ist das Tragelement 10' als Innenrohr ausgebildet. Es weist in seinem innerhalb der Hohlwelle 3 befindlichen Bereich mindestens eine Ausnehmung 16 für den Durchtritt des Kühlmediums 6 auf. In der Regel sind mehrere derartige Ausnehmungen 16 vorhanden. Wenn das Kühlmedium 6 einmal (1x) durch die Hohlwelle 3 strömen soll und danach am anderen Ende der Hohlwelle 3 ein zum Kupplungsteil 7' ähnliches Kupplungsteil vorhanden ist, ist die Ausnehmung 16 bzw. sind die Ausnehmungen 16 in der Regel in der Nähe des Kupplungsteils 7' oder spätestens zu Beginn der Hohlwelle 3 angeordnet. Anderenfalls, wenn also das Kühlmedium 6 ausgehend vom Kupplungsteil 7' zunächst durch das Innenrohr 10' strömen soll und sodann zwischen dem Innenrohr 10' und der Hohlwelle 3 zum Kupplungsteil 7' zurückströmen soll, sind die Ausnehmungen 16 in der Regel in der Nähe des vom Kupplungsteil 7' abgewandten Endes des Tragelements 10' angeordnet.

Unabhängig davon, ob die eine oder die andere Ausgestaltung realisiert ist, ist das Sensorelement 11 an der Stirnseite des Tragelements 10' angeordnet. Das Sensorelement 11 kann insbesondere über eine Abschlussscheibe 17 mit der Innenseite des Innenrohrs 10' verbunden sein. Die Zwischenscheibe 17 kann beispielsweise aus Kunststoff bestehen. Gegebenenfalls kann die Abschlussscheibe 17, wie in FIG 3 durch mögliche Strömungspfade des Kühlmediums 6 angedeutet ist, analog zur Tragstruktur 13 Durchbrechungen für den Durchtritt des Kühlmediums 6 aufweisen. In diesem Fall fungieren die Durchbrechungen als Ausnehmungen. Sie können in diesem Fall alternativ oder zusätzlich zu den Ausnehmungen 16 auf der Mantelfläche des Innenrohres vorhanden sein.

In der Regel ist das Sensorelement 11 entsprechend der Darstellung in den FIG 2 bis 4 durch eine Verkabelung 18 mit einer Auswertungseinrichtung verbunden. Die Auswertungseinrichtung ist in den FIG nicht mit dargestellt. Die Verkabelung 18 verläuft bei der Ausgestaltung gemäß den FIG 2 und 3 vorzugsweise im Inneren des Tragelements 10 und im Inneren des Stabes 14 bzw. im Inneren der Zwischenscheibe 15. Dadurch ist es möglich, dass die Verkabelung 18 vollständig vor einem unmittelbaren Kontakt mit dem Kühlmedium 6 geschirmt ist. Bei der Ausgestaltung gemäß FIG 4 kann dies oftmals nicht erreicht werden. Bei der Ausgestaltung von FIG 4 ist die Verkabelung 18 vorzugsweise unmittelbar vom Kühlmedium 6 umgeben. Sie verläuft also vorzugsweise innerhalb oder außerhalb des Innenrohres 10'.

In den Fällen, in denen die Tragstruktur 13 Durchbrechungen aufweist, können die Durchbrechungen der Tragstruktur 13 prinzipiell beliebig ausgestaltet sein.

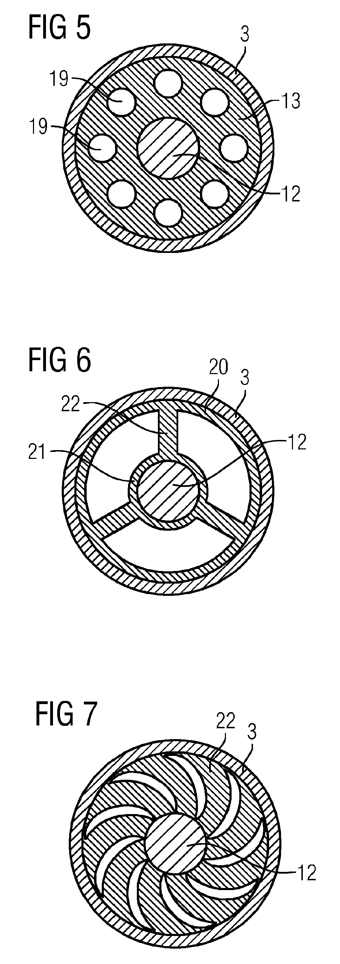

Beispielsweise ist es entsprechend der Darstellung in FIG 5 möglich, dass die Tragstruktur 13 einen Großteil der Fläche abdeckt und als Durchbrechungen nur relativ kleine Ausnehmungen 19 vorhanden sind. In diesem Fall bleibt im Bereich der Tragstruktur 13 nur ein relativ kleiner Strömungsquerschnitt erhalten. Die Ausnehmungen 19 können beispielsweise als kreisförmige Ausnehmungen ausgebildet sein, die kreisförmig um die Maßverkörperung 12 herum angeordnet sind. Die Anzahl an Ausnehmungen 19 liegt vorzugsweise zwischen vier und zwölf.

Alternativ ist es entsprechend der Darstellung in FIG 6 möglich, dass die Tragstruktur 13 einen äußeren Ring 20 und einen inneren Ring 21 aufweist, die über einige wenige Speichen 22 miteinander verbunden sind. In diesem Fall bleibt auch im Bereich der Tragstruktur 13 ein Großteil der Querschnittfläche der Hohlwelle als Strömungskanal erhalten. Die in FIG 6 gezeigte Anzahl von drei Speichen 22 ist jedoch nur rein beispielhaft.

Wiederum alternativ ist es entsprechend der Darstellung in FIG 7 möglich, dass die Speichen 22, die den äußeren Ring 20 und den inneren Ring 21 miteinander verbinden, sichelförmig gebogen sind. In diesem Fall ergibt sich durch die Rotation der Hohlwelle 3 eine Pumpwirkung. Diese Ausgestaltung kann insbesondere dann sinnvoll sein, wenn die Drehrichtung der Hohlwelle 3 stets dieselbe ist.

Obenstehend wurden verschiedene Ausgestaltungen der Maßverkörperung 12, der Tragstruktur 13 und des Tragelements 10, 10' sowie dessen Befestigung und Halterung im oder am Kupplungsteil 7, 7' erläutert. Die Ausgestaltungen der verschiedenen Elemente sind nach Bedarf miteinander kombinierbar. Es muss lediglich gewährleistet bleiben, dass das Kühlmedium 6 alle Bereiche der Hohlwelle 3 durchströmt, die von dem Kühlmedium 6 gekühlt werden sollen.

Zusammengefasst betrifft die vorliegende Erfindung somit folgenden Sachverhalt:

Eine Maschine weist eine Hohlwelle 3 auf, die in Lagern 4 gelagert ist, so dass die Hohlwelle 3 um eine Rotationsachse 5 rotierbar ist. Die Hohlwelle 3 wird im Betrieb der Maschine von einem Kühlmedium 6 durchströmt. Die Hohlwelle 3 grenzt axial und/oder radial außen mediumdicht an ein Kupplungsteil 7, 7' an, über welches das Kühlmedium 6 in die Hohlwelle 3 eingespeist und/oder aus der Hohlwelle 3 ausgespeist wird. Am Kupplungsteil 7, 7' ist drehfest und relativ zur Rotationsachse 5 zentriert ein Tragelement 10, 10' angeordnet, das in die Hohlwelle 3 hineinragt und von dem Kühlmedium 6 umgeben ist. Auf dem Tragelement 10, 10' ist relativ zur Rotationsachse 5 zentriert ein Sensorelement 11 angeordnet. An der Innenseite der Hohlwelle 3 ist eine Maßverkörperung 12 drehfest mit der Hohlwelle 3 verbunden. Die Maßverkörperung 12 und das Sensorelement 11 wirken derart zusammen, dass anhand der von dem Sensorelement 11 ausgegebenen Signale S die Drehstellung der Hohlwelle 3 und/oder die Änderung der Drehstellung der Hohlwelle 3 ermittelbar sind.

Die vorliegende Erfindung weist viele Vorteile auf. Insbesondere ist auf einfache und zuverlässige Weise eine Integration eines onaxis-Gebers auch bei einer Maschine möglich, deren Hohlwelle 3 von einem Kühlmedium 6 durchströmt wird. Die erforderlichen Teile - insbesondere das Tragelement 10, 10', die Tragstruktur 13, der Stab 14, die Zwischenscheibe 15 und die Abschlussscheibe 17 - können als einfache und kostengünstig herstellbare Kunststoffteile ausgebildet sein. Mittels der genannten Teile 10, 13, 14, 15 und 17 ist weiterhin auf einfache Weise eine Anpassung des aus Sensorelement 11 und Maßverkörperung 12 bestehenden Gebers an nahezu beliebige Durchmesser der Hohlwelle 3 und des Kupplungsteils 7, 7' möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Maschine,
- wobei die Maschine eine Hohlwelle (3) aufweist, die in Lagern (4) gelagert ist, so dass die Hohlwelle (3) um eine Rotationsachse (5) rotierbar ist,
- wobei die Hohlwelle (3) im Betrieb der Maschine von einem Kühlmedium (6) durchströmt wird,
- wobei die Hohlwelle (3) an einem axialen Ende axial und/ oder radial außen mediumdicht an ein Kupplungsteil (7, 7') angrenzt,
- wobei über das Kupplungsteil (7, 7') das Kühlmedium (6) in die Hohlwelle (3) eingespeist und/oder aus der Hohlwelle (3) ausgespeist wird,
- wobei am Kupplungsteil (7, 7') drehfest und relativ zur Rotationsachse (5) zentriert ein Tragelement (10, 10') angeordnet ist, das in die Hohlwelle (3) hineinragt und von dem Kühlmedium (6) umgeben ist,
- wobei auf dem Tragelement (10, 10') relativ zur Rotationsachse (5) zentriert ein Sensorelement (11) angeordnet ist,
- wobei an der Innenseite der Hohlwelle (3) eine Maßverkörperung (12) drehfest mit der Hohlwelle (3) verbunden ist und
- wobei die Maßverkörperung (12) und das Sensorelement (11) derart zusammenwirken, dass anhand der von dem Sensorelement (11) ausgegebenen Signale (S) die Drehstellung der Hohlwelle (3) und/oder die Änderung der Drehstellung der Hohlwelle (3) ermittelbar sind.

2. Maschine nach Anspruch 1,
**dadurch gekennzeichnet,**
**dass** die Maßverkörperung (12) als Ring oder als Scheibe ausgebildet ist.

3. Maschine nach Anspruch 1 oder 2,
**dadurch gekennzeichnet,**
**dass** die Maßverkörperung (12) über eine Tragstruktur (13) mit der Hohlwelle (3) verbunden ist.

4. Maschine nach Anspruch 3,
**dadurch gekennzeichnet,**
**dass** die Tragstruktur (13) Durchbrechungen für den Durchtritt des Kühlmediums (6) durch die Tragstruktur (13) aufweist.

5. Maschine nach einem der Ansprüche 1 bis 4,
**dadurch gekennzeichnet,**
**dass** das Tragelement (10) über einen sich von der Innenseite des Kupplungsteils (7) zur Rotationsachse (5) erstreckenden Stab (14) mit der Innenseite des Kupplungsteils (7) verbunden ist.

6. Maschine nach einem der Ansprüche 1 bis 4,
**dadurch gekennzeichnet,**
**dass** das Tragelement (10) über eine Zwischenscheibe (15) mit der Innenseite des Kupplungsteils (7) verbunden ist und dass die Zwischenscheibe (15) Durchbrechungen für den Durchtritt des Kühlmediums (6) durch die Zwischenscheibe (15) aufweist.

7. Maschine nach Anspruch 3 oder 4,
**dadurch gekennzeichnet,**
**dass** das Kupplungsteil (7) axial beweglich angeordnet ist und die Hohlwelle (3) radial außen umgibt.

8. Maschine nach einem der Ansprüche 1 bis 4,
**dadurch gekennzeichnet,**
**dass** das Tragelement (10') als Innenrohr ausgebildet ist, das in seinem innerhalb der Hohlwelle (3) befindlichen Bereich mindestens eine Ausnehmung (16) für den Durchtritt des Kühlmediums (6) aufweist und dass das Sensorelement (11) an der Stirnseite des Tragelements (10') angeordnet ist.

9. Maschine nach Anspruch 8,
**dadurch gekennzeichnet,**
**dass** das Sensorelement (11) über eine Abschlussscheibe (17) mit der Innenseite des Innenrohrs (10')verbunden ist.

10. Maschine nach Anspruch 8 oder 9,
**dadurch gekennzeichnet,**
**dass** das Kupplungsteil (7') als Lagerschild ausgebildet ist, der axial an die Hohlwelle (3) angrenzt.

11. Maschine nach Anspruch 10,
**dadurch gekennzeichnet,**
**dass** das Innenrohr (10') in den Lagerschild (7') eingelassen ist.

12. Maschine nach einem der Ansprüche 1 bis 11,
**dadurch gekennzeichnet,**
**dass** eine Verkabelung (18) des Sensorelements (11) im Inneren des Tragelements (10, 10') angeordnet ist, so dass die Verkabelung (18) vor einem unmittelbaren Kontakt mit dem Kühlmedium (6) geschirmt ist.

13. Maschine nach einem der Ansprüche 1 bis 11,
**dadurch gekennzeichnet,**
**dass** die Verkabelung (18) unmittelbar vom Kühlmedium (6) umgeben ist.

14. Maschine nach einem der obigen Ansprüche,
**dadurch gekennzeichnet,**
**dass** die Maschine als elektrische Maschine ausgebildet ist.
